# EUROPEAN PATENT APPLICATION

(11) **EP 2 105 722 A2**
(43) Date of publication of application: **30.09.2009**
(21) Application number: 09004185.6
(22) Date of filing: 24.03.2009
(51) Int. Cl.: G01N 1/28

(54) **Specimen pre-treatment apparatus and specimen holder**

(30) Priority: 27.03.2008 JP 2008084222
(71) Applicant: Horiba, Ltd., Kyoto-shi, Kyoto 601-8510 (JP)
(72) Inventor: Hirano, Akihiro, Kyoto-shi Kyoto 601-8510 (JP); Iwasaki, Shunsuke, Kyoto-shi Kyoto 601-8510 (JP)
(74) Representative: Hoffmann, Jörg Peter

(57) **Abstract**

In a specimen pre-treatment apparatus, a specimen support part is screwed in a hollow column casing part while facing a specimen support end toward the same direction as an open end of the hollow column casing part. A specimen holder is arranged so that the specimen support end which supports a specimen is opposite to an end portion of an anode (electrode). The change of the screwing depth can adjust a position of the specimen support part with respect to the hollow column casing part. Accordingly, it allows adjusting the distance between the specimen that is supported by the specimen support part and the end portion of the anode.

## Description

### BACKGROUND OF THE INVENTION

### 1. Field of the Invention

A certain aspect of the embodiment discussed herein is related to a specimen pre-treatment apparatus and a specimen holder for forming a specimen into a shape suitable for a measurement by a glow discharge in order to form a thin specimen that is to be measured by e.g. a transmission electron microscope.

### 2. Description of Related Art

Conventionally, a scanning electron microscope (SEM) may be used in order to visually observe a structure or tissue of a specimen. The observation surface of the specimen may have to be pre-treated, in a preparation process, in order to be observed by means of the SEM. This pre-treatment process may expose, clean and smoothe the observation surface at the desired position of the specimen. Conventionally, a technique is known to clean and smooth the surface of the specimen with an ion bombardment caused by a glow discharge. Japanese Patent Application Laid-Open No. 7-146239 discloses this technique.

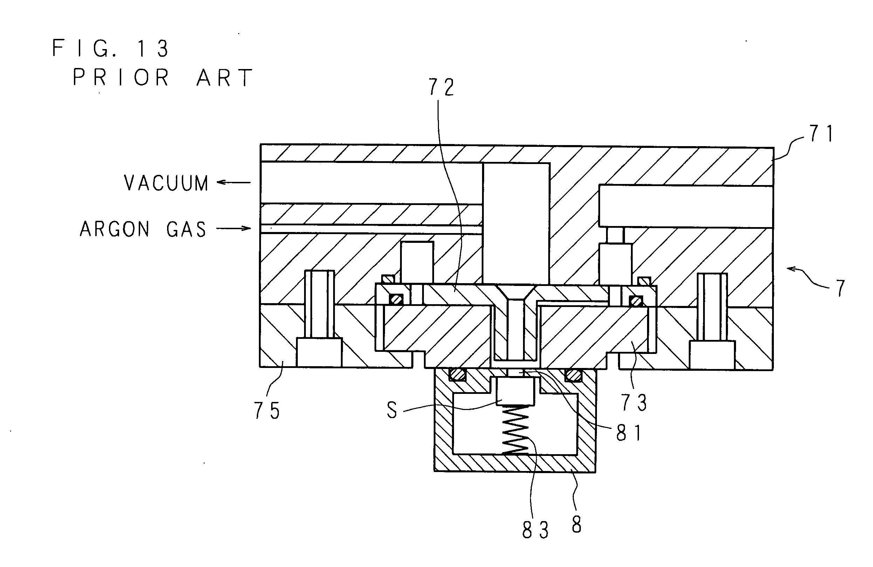

The specimen pre-treatment apparatus with the glow discharge includes a glow discharge tube that generates the glow discharge, and a specimen holder. FIG. 13 is a sectional view showing the internal structure of a conventional glow discharge tube and a conventional specimen holder. A glow discharge tube 7 has a short cylindrical lamp body 71, an electrode 72, a ceramic member 73, and a pressing block 75.

The lamp body 71 is formed with a recessed portion at the center of the end face to which the pressing block 75 is mounted. The lamp body 71 has a center hole formed at the central part. The lamp body 71 further has a vacuum hole used for vacuuming and a gas feed hole for feeding argon gas, both of which communicate with the center hole. The electrode 72 disposed at the recessed portion of the lamp body 71 has a disc like shape from which a cylindrical portion projects. A through-hole is formed at the center of the cylindrical portion. When the electrode 72 is mounted to the recessed portion of the lamp body 71, the center hole of the lamp body 71 and the through-hole of the electrode 72 communicate with each other. The ceramic member 73 is a thick disk-shaped member with an insertion hole through which the cylindrical portion of the electrode 72 is inserted, so as to be arranged to cover the electrode 72. The pressing block 75 is an annular member made of an insulating material and presses the ceramic member 73 against the lamp body 71, so as to fix the electrode 72 and the ceramic member 73 to the lamp body 71. The pressing block 75 is mounted to the end face of the lamp body 71 with a bolt.

The cylindrical portion of the electrode 72 is arranged toward the outside of the glow discharge tube 7, so that the through-hole is open to the outside. The specimen holder 8 is formed into a box-like shape, and is pressed against the ceramic member 73. The specimen holder 8 is provided an opening 81 at the position opposite to the opening of the cylindrical portion of the electrode 72. In addition, the specimen holder 8 is interiorly provided a spring 83 that presses a specimen S from the interior toward the opening 81. Since the spring 83 presses the specimen S toward the opening 81, the specimen S opposes to the opening of the cylindrical portion of the electrode 72, and a predetermined gap is formed between the specimen S and the leading end of the electrode 72.

The glow discharge is produced between the electrode 72 and the specimen holder 8, by applying voltage between the electrode 72 and the specimen holder 8 after vacuum pressure followed by feeding the argon gas to the glow discharge tube 7 and the specimen holder 8. The glow discharge generates argon ions in the argon gas. The argon ions pass through the through-hole of the electrode 72 and the opening 81. Then, the surface of the specimen S is sputtered by striking the argon ions to the specimen S. The sputtering makes the surface of the specimen S clean and smooth, to be an observation surface that can be observed with the SEM.

Since the specimen holder 8 is interiorly provided the spring 83 pressing the specimen S toward the opening 81, the glow discharge tube 7 is sufficiently sealed by the specimen S, and then the glow discharge and sputtering are stably generated. The distance between the specimen S and the end face of the electrode 72 is maintained to be a fixed distance specified by the thickness of the specimen holder 8.

### SUMMARY OF THE INVENTION

In the specimen holder 8 shown in FIG. 13, the spring 83 presses the specimen S toward the opening 81 in the specimen holder 8, to fix the specimen S. It means, the specimen holder 8 cannot fix a specimen S that is smaller than the opening 81. Furthermore, the glow discharge tube 7 requires to be sealed sufficiently by making the specimen S completely close the opening 81. Thus, the specimen holder 8 cannot produce the glow discharge when the specimen S has a shape that incompletely closes the opening 81, such as an elongate specimen S. As described above, the conventional specimen pre-treatment apparatus may limit the shape of the specimen S, unfortunately. Furthermore, the glow discharge tube 7 of the conventional specimen pre-treatment apparatus may be unfortunately provided insufficient sealing, when a plate-like specimen S is arranged vertically with respect to the opening 81, or when an edge of a specimen S is arranged at the position of the opening 81. Thus, the conventional specimen pre-treatment apparatus may limit a position where the observation surface is formed on the specimen S, unfortunately.

The speed for cleaning and smoothing the specimen S by the sputtering, and the shape of the observation surface formed on the specimen S depend upon the distance between the specimen S and the leading end of the electrode 72. A user may desire to adjust the speed for cleaning and smoothing or the shape of the observation surface according to the type or the use purpose of the specimen S. However, the conventional specimen pre-treatment apparatus unfortunately cannot adjust the position of the specimen S, because the position of the specimen S is pressed and fixed by the spring 83 in the specimen holder 8. Thus, the conventional specimen pre-treatment apparatus cannot adjust the speed for cleaning and smoothing or the shape of the observation surface through the adjustment of the distance between the specimen S and the leading end of the electrode 72, unfortunately.

In addition, when a user utilizes the SEM to observe the specimen S having the observation surface formed by the conventional specimen pre-treatment apparatus, the user has to remove the specimen S having the observation surface from the specimen holder 8, place the specimen S onto a specimen support of another specimen holder for an exclusive use of the SEM, and attach this another specimen holder having the specimen S to the SEM. When the specimen S is exposed to air for a long time after forming the observation surface, the observation surface is contaminated by an oxide film or dust. Therefore, it is desirable to prevent the exposure of the specimen S having the observation surface from air as much as possible. However, as described above, the conventional specimen pre-treatment apparatus takes time and efforts to observe the specimen S having the observation surface with the SEM. Therefore, the observation surface of the specimen S might be contaminated.

The present invention is accomplished in view of the foregoing circumstances, and aims to provide a specimen pre-treatment apparatus and a specimen holder that are capable of forming an observation surface regardless of a size and shape of a specimen, and are capable of suitably adjusting the distance between a specimen and an electrode.

The present invention further aims to provide a specimen pre-treatment apparatus and a specimen holder that are capable of reducing time and efforts for the observation of the specimen with an SEM, and preventing the contamination possibility of the observation surface.

A specimen pre-treatment apparatus that pre-treats a specimen with a glow discharge, according to a first aspect of the present invention, includes: an electrode having a cylindrical end portion; and a specimen holder that holds the specimen at the position opposite to the end portion of the electrode; wherein the specimen holder comprises: a hollow column casing part that is formed into a hollow column shape having one end which is open and the other end which is closed, and that has a female screw formed on at least a part of the inner surface thereof, and a specimen support part that is formed into a column shape having a specimen support end which supports the specimen, and that has a male screw which is formed on at least a part of a lateral surface thereof and screwed in the female screw at the hollow column casing part; the specimen support part is screwed in the hollow column casing part with the specimen support end facing in the same direction as the end which is open of the hollow column casing part; the specimen support end is opposite to the cylindrical end portion of the electrode; and the glow discharge is produced between the electrode and the specimen that is hold by the specimen holder.

According to the first aspect, the position of the specimen support part with respect to the hollow column casing part is adjusted by changing the screwing depth that the specimen support part is screwed to the hollow column casing part. Therefore, it is possible to adjust the distance between the specimen on the specimen support part and the end portion of the electrode. Further, it is possible to correctly adjust the distance between the specimen and the end portion of the electrode by the screwing engagement. Thus, it is possible to adjust the speed for cleaning and smoothing (pre-treatment) or the shape of the observation surface with the glow discharge, through an appropriate adjustment of the distance between the end portion of the electrode and the specimen.

In a specimen pro-treatment apparatus according to a second aspect, the specimen support end is formed into a planar shape to adhere the specimen.

According to the second aspect, the specimen can be held by adhesive onto the specimen support end of the specimen support part. It is possible to arrange a specimen having any size and any shape to be opposite to the end portion of the electrode, so long as the specimen support end can hold the specimen. Therefore, it is possible to relax the limitation based on the size and the shape of the specimen having the observation surface, regarding the observation with the SEM. In addition, because an optional portion of the specimen can be arranged to be opposite to the end portion of the electrode, it allows to form the observation surface on the desired part of the specimen in accordance with use purposes, and then makes possible to observe a desired part of the specimen by means of the SEM.

In a specimen pre-treatment apparatus according to a third aspect of the present invention, the specimen support part includes a table-like member that supports the specimen and is detachably mounted at the specimen support end.

According to the third aspect, the specimen support end of the specimen support part is configured to detachably mount the table-like member that places the specimen, such as e.g. a specimen support member for an exclusive use of the SEM. The specimen pre-treatment apparatus holds the specimen through mounting the detachable member that places the specimen. This configuration reduces the time and efforts that are required to observe the specimen having the observation surface with the SEM or the like, because of detachment of the member that places the specimen having the observation surface from the specimen support part, and mount of the detached member to the SEM, or the like. Accordingly, it can reduce the chance that the surface of the specimen is exposed to air and contaminated. Thus, the observation surface of the specimen can be kept under the satisfactory condition for observation.

In a specimen pre-treatment apparatus according to a fourth aspect of the present invention, the hollow column casing part and the specimen support part are made of a conductive material; the glow discharge is allowed to generate by applying a voltage between the electrode and the specimen holder; and the specimen holder further comprises a conductive coil spring that has one end portion being in contact with an end of the specimen support part which is not the specimen support end, and has the other end portion being in contact with the other end which is closed of the hollow column casing part.

According to the fourth aspect, the coil spring can contact both of the hollow column casing part and the specimen support part, by expanding and contracting, regardless of the position of the specimen support part. Because of constant contact of the coil spring with both of the hollow column casing part and the specimen support part, it can surely secure a conduction from the hollow column casing part to the specimen support during applying the voltage between the electrode and the specimen holder to generate the glow discharge. Thus, this configuration can generate the glow discharge stably.

A specimen pre-treatment apparatus according to a fifth aspect of the present invention further includes an enclosure that encloses the cylindrical end portion of the electrode; and a vacuum unit that vacuums an inside of the electrode, wherein the specimen holder is arranged by pressing the end which is open of the hollow column casing part against the structure; and the specimen support part has a through-hole that is hollowed out from the specimen support end to the opposite end of the specimen support part.

According to the fifth aspect, an inside of the specimen holder is vacuumed through vacuuming the inside of the electrode, because of the through-hole formed at the specimen support part. Therefore, the present invention can fix the specimen holder and provide excellent advantages, i.e., such as stable generation of the glow discharge.

In a specimen pre-treatment apparatus according to a sixth aspect of the present invention, the specimen support part has a table-like hole formed at the specimen support end.

According to the sixth aspect, the specimen support end of the specimen support part has a table-like hole that can detach the table-like member, such as e.g. the specimen support member for the exclusive use of the SEM, which places the specimen. In other words, the specimen pre-treatment apparatus holds the specimen by attaching the table-like member that places the specimen. This configuration can reduce the time and efforts that are required to observe the specimen having the observation surface with the SEM or the like. Accordingly, it can reduce the chance that the surface of the specimen is exposed to air and contaminated. Thus, the observation surface of the specimen can be kept under the satisfactory condition for observation.

A specimen holder that holds a specimen whose surface is pre-treated with a glow discharge according to a seventh aspect of the present invention, includes: a hollow column casing part that is formed into a hollow column shape having one end which is open and the other end which is closed, and that has a female screw formed on at least a part of the inner surface thereof, and a specimen support part that is formed into a column shape having a specimen support end which supports the specimen, and that has a male screw which is formed on at least a part of a lateral surface thereof and screwed in the female screw at the hollow column casing part, wherein the specimen support part is screwed in the hollow column casing part with the specimen support end facing in the same direction as the end which is open of the hollow column casing part

According to the seventh aspect, the position of the specimen support part with respect to the hollow column casing part is adjusted by changing the screwing depth that the specimen support part is screwed to the hollow column casing part. Therefore, it is possible to adjust the distance between the specimen on the specimen support part and the end portion of the electrode. Further, it is possible to correctly adjust the distance between the specimen and the end portion of the electrode by the screwing engagement. Thus, it is possible to adjust the speed for cleaning and smoothing (pre-treatment) or the shape of the observation surface with the glow discharge through an appropriate adjustment of the distance between the end portion of the electrode and the specimen.

In a specimen holder according to an eighth aspect of the present invention, the specimen support end is formed into a planar shape to adhere the specimen.

According to the eighth aspect, the specimen is supported by adhesive onto the specimen support end of the specimen support part. It is possible to arrange a specimen having any size and any shape to be opposite to the end portion of the electrode, so long as the specimen support end can hold the specimen. Therefore, it is possible to relax the limitation based on the size and the shape of the specimen having the observation surface, regarding the observation with the SEM. In addition, because an optional portion of the specimen can be arranged to be opposite to the end portion of the electrode, this configuration allows to form the observation surface on the desired part of the specimen in accordance with use purposes, and makes possible to observe desired part of the specimen by means of the SEM.

In a specimen holder according to a ninth aspect of the present invention, the specimen support part includes a table-like member that supports the specimen and is detachably mounted at the specimen support end.

According to the ninth aspect, the specimen support end of the specimen support part is configured to detachably mount the table-like member, such as e.g. the specimen support member for the exclusive use of the SEM, which places the specimen. The specimen holder holds the specimen through mounting the detachable member that places the specimen. This configuration reduces the time and efforts that are required to observe the specimen having the observation surface with the SEM or the like, because of detachment of the member that places the specimen having the observation surface from the specimen support part and mount of the detached member to the SEM, or the like. Accordingly, it reduces the chance that the surface of the specimen is exposed to air and contaminated. Thus, the observation surface of the specimen can be kept under the satisfactory condition for observation.

In a specimen holder according to a tenth aspect of the present invention, the hollow column casing part and the specimen support part are made of a conductive material; and the specimen holder comprises a conductive coil spring that has one end being in contact with an end of the specimen support part which is not the specimen support end, and has the other end being in contact with an inner bottom portion of the hollow column casing part.

According to the tenth aspect, the coil spring can contact both of the hollow column casing part and the specimen support part, by expanding and contracting, regardless of the position of the specimen support part. Because of constant contact of the coil spring with both of the hollow column casing part and the specimen support part, it can surely secure a conduction from the hollow column casing part to the specimen support, during applying the voltage between the electrode and the specimen holder to generate the glow discharge. Thus, this configuration can generate the glow discharge stably.

In a specimen holder according to an eleventh aspect of the present invention, the specimen support part has a through-hole that is hollowed out from the specimen support end to the opposite end of the specimen support part.

According to the eleventh aspect, an inside of the specimen holder is vacuumed through vacuuming the inside of the electrode, because of the through-hole formed at the specimen support part. Therefore, the present invention can fix the specimen holder and provide excellent advantages, i.e., such as stable generation of the glow discharge.

In a specimen holder according to a twelfth aspect of the present invention, the specimen support part has a table-like hole formed at the specimen support end.

According to the twelfth aspect, the specimen support end of the specimen support part has a table-like hole that can detach the table-like member, such as e.g. the specimen support member for the exclusive use of the SEM, which places the specimen. In other words, the specimen holder holds the specimen by attaching the table-like member that places the specimen. This configuration reduces the time and efforts that are required to observe the specimen having the observation surface with the SEM or the like. Accordingly, it reduces the chance that the surface of the specimen is exposed to air and contaminated. Thus, the observation surface of the specimen can be kept under the satisfactory condition for observation.
The above and further objects and features of the invention will more fully be apparent from the following detailed description with accompanying drawings.

### BRIEF DESCRIPTION OF THE DRAWINGS

FIG. 1 is a block diagram showing a structure of a specimen pre-treatment apparatus according to the present invention;
FIG. 2 is a sectional view showing the internal structure of a glow discharge tube and a specimen holder;
FIG. 3 is an exploded perspective view showing the specimen holder;
FIGS. 4A and 4B are sectional views showing the specimen holder;
FIG. 5 is a block diagram showing the internal structure of a generator constituting a power source section;
FIG. 6 is a block diagram showing the internal structure of a matching box constituting the power source section;
FIGS. 7A and 7B are sectional views showing the shape of the pre-treated specimen;
FIGS. 8A and 8B are perspective views schematically showing the specimen to be pre-treated;
FIG. 9 is a schematic view showing specimen support parts having the other shapes;
FIG. 10 is an exploded perspective view showing a specimen holder that a specimen support for the SEM is mounted to a specimen support part;
FIG. 11 is a perspective view showing the specimen support part with the specimen support for the SEM;
FIGS. 12A and 12B are perspective views showing a specimen support part that holds a specimen between a semi-circular column portion and a pressing plate portion; and
FIG. 13 is a sectional view showing the internal structure of a conventional glow discharge tube and a specimen holder.

### DESCRIPTION OF THE PREFERRED EMBODIMENTS

The present invention will be described below with reference to the drawings showing embodiments thereof.

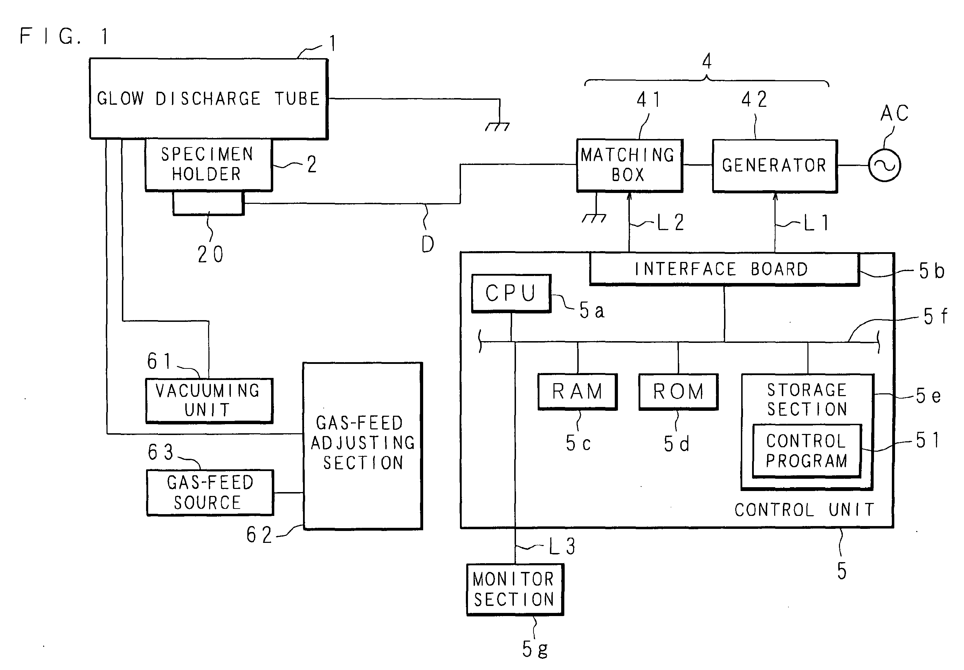

FIG. 1 is a block diagram showing the structure of a specimen pre-treatment apparatus according to the present invention. The specimen pre-treatment apparatus comprises a glow discharge tube 1 for generating a glow discharge, a specimen holder 2 that holds a specimen which is subjected to a pre-treatment, such as etching, cleaning, sputtering, milling or the like, a power source section 4 that produces power for an applied voltage to generate the glow discharge, and a control unit 5 that totally controls the specimen pre-treatment apparatus. The power source section 4 has a generator 42 and a matching box 41 that are connected to an AC power source AC (220 V in the present embodiment) for generating high-frequency power. The generator 42 and the matching box 41 are respectively connected to the control unit 5. The glow discharge tube 1 and the matching box 41 are set to have the same electric potential.

The specimen pre-treatment apparatus comprises a vacuuming unit 61 that vacuums an inside of the glow discharge tube 1. The specimen pre-treatment apparatus further comprises a gas-feed adjusting section 62 and a gas-feed source 63 that have a function of feeding argon gas into the glow discharge tube 1 after the vacuuming. A gas container filled with argon gas is one example of the gas feed source 63. There is a pipe arranged to feed the argon gas from the gas feed source 63 to the glow discharge tube 1. The gas-feed adjusting section 62 is disposed on the middle of the pipe where is between the gas feed source 63 and the glow discharge tube 1. The gas-feed adjusting section 62 has an electromagnetic valve for adjusting the flow rate of the argon gas fed to the glow discharge tube 1 from the gas feed source 63.

A computer is used for the control unit 5. The control unit 5 comprises a CPU 5a, an RAM 5c, an ROM 5d, and a storage section 5e, which are connected to an internal bus 5f, respectively. The control unit 5 comprises an interface board 5b that connects a first connection cord L1 extending from the generator 42 and a second connection cord L2 extending from the matching box 41. The interface board 5b is connected to the internal bus 5f. A monitor section 5g is connected to the internal bus 5f through a monitor connection line L3.

The RAM 5c stores data or the like for various control processes executed by the CPU 5a, temporarily. The ROM 5d stores a program or the like specifying basic processes executed by the CPU 5a, in advance. The storage section 5e is non-volatile storage means such as a hard disk or semiconductor memory. This storage section 5e stores a control program 51 that specifies a content of the control process executed by the CPU 5a in relation to the pre-treating process of the specimen with the glow discharge. The CPU 5a loads as appropriate the control program 51 from the storage section 5e to the RAM 5c, and executes a required process according to the control program 51 loaded to the RAM 5c. The CPU 5a further performs various settings and controls based on an instruction inputted to an input section (not shown) such as a keyboard or a mouse.

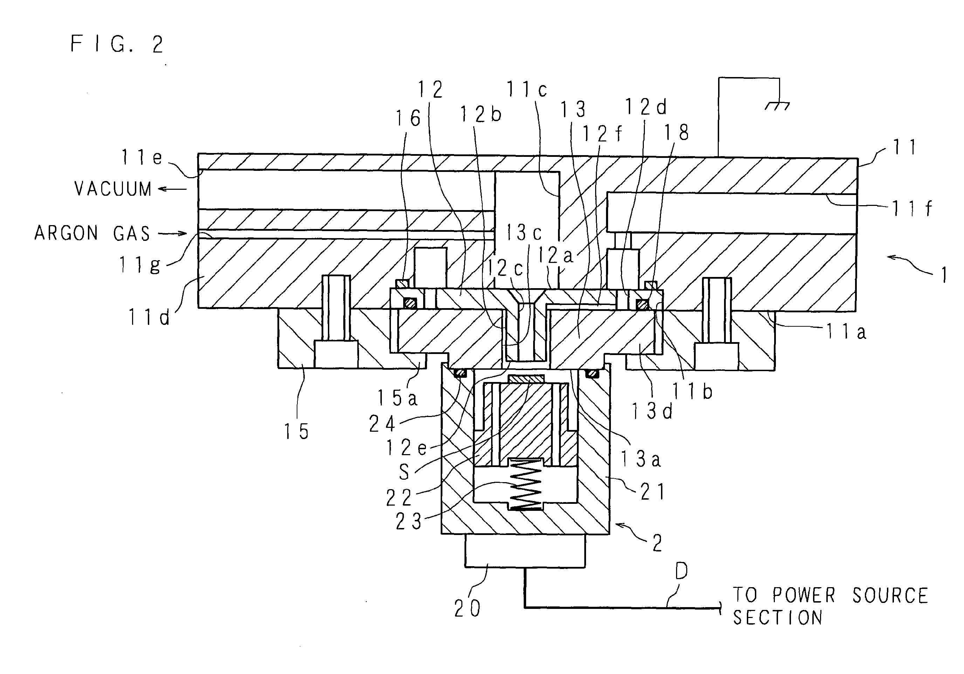

FIG. 2 is a sectional view showing the internal structure of the glow discharge tube 1 and the specimen holder 2. The specimen holder 2 is mounted to one surface of the glow discharge tube 1. The glow discharge tube 1 is configured to comprise a lamp body 11 having a short cylindrical shape, an anode (electrode) 12, a ceramic member (enclosure) 13, and a pressing block 15.

The lamp body 11 is formed with a recessed portion 11b at the center of the end face 11a to which the pressing block 15 is mounted. The recessed portion 1b mounts the anode 12. The lamp body 11 has a center hole 11c formed at the central part of the recessed portion 11b. Furthermore, the lamp body 11 has plural vacuum holes 11e and 11f that are formed from the peripheral wall portion 11d toward the center part for vacuuming. One vacuum hole 11e communicates with the center hole 11c, while the other vacuum hole 11f communicates with the recessed portion 11b. The lamp body 11 further has a gas-feed hole 11g for feeding argon gas. The gas-feed hole 11g is formed from the peripheral wall portion 11d toward the center part to communicate with the center hole 11c. An earth lead is connected to the lamp body 11, so that the lamp body 11 has an earth potential.

The anode 12 is mounted to the recessed portion 11b of the lamp body 11 and has a disk-like portion 12a and a cylindrical portion (cylindrical end portion) 12b projecting from the center of the disk-like portion 12a. The anode 12 further has a through-hole 12c passing through the disk-like portion 12a from the inside of the cylindrical portion 12b. The disk-like portion 12a also has a hole 12d. When the anode 12 is mounted to the recessed portion 11b of the lamp body 11, the center hole 11c of the lamp body 11 and the through-hole 12c communicate each other to be substantially coaxial. When the anode 12 is mounted to the recessed portion 11b of the lamp body 11, the anode 12 has an earth potential through the lamp body 11. In addition, when the anode 12 is mounted to the lamp body 11, the cylindrical portion 12b projects from the end surface 11a of the lamp body 11. An O-ring 16 is mounted between the lamp body 11 and the anode 12, for sealing the center hole 11c of the lamp body 11 and the through-hole 12c of the anode 12 in a case that the anode 12 is mounted in the recessed portion 11b.

The ceramic member 13 is made of an insulating ceramic and arranged to cover the anode 12. The ceramic member 13 is formed into a thick disk-like shape, and has a flange portion 13d that is projecting and covers the disk-like portion 12a of the anode 12. In addition, the ceramic member 13 has an insertion hole 13c, at its center, into which the cylindrical portion 12b of the anode 12 is inserted. The ceramic member 13 is arranged to be opposite to the disk-like portion 12a of the anode 12. The O-ring 18 is mounted between the ceramic member 13 and the disk-like portion 12a for sealing. A predetermined gap is formed between the insertion hole 13c and the cylindrical portion 12b of the anode 12 while mounting the ceramic member 13. A channel 12f is locally formed on the surface of the disk-like portion 12a of the anode 12, which is opposite to the ceramic member 13 when the ceramic member 13 is arranged. The channel 12f forms an intake hole that communicates from the predetermined to the hole 12d, while mounting the ceramic member 13 to cover the anode 12.

The pressing block 15 is an annular member made of an insulating material that fixes the anode 12 and the ceramic member 13 to the lamp body 11. The pressing block 15 presses a projecting portion 15a at the inner peripheral edge on the flange portion 13d toward the lamp body 11. The pressing block 15 is fixed to the end surface 11a of the lamp body 11 with a bolt. As shown in FIG. 2, the pressing block 15 is mounted to project from the end surface 11a of the lamp body 11, and is configured to arrange the ceramic member 13 and the cylindrical portion 12b of the anode 12 at the inside of the pressing block 15. The insertion hole 13c is open at the end surface 13a of the ceramic member 13. The cylindrical portion 12b of the anode 12 is arranged in the insertion hole 13c.

The specimen holder 2 is pressed against the end surface 13a of the ceramic member 13 to attach the glow discharge tube 1. The specimen holder 2 holds a specimen S, and is arranged at the position opposite to the opening of the insertion hole 13c of the ceramic member 13. A cathode 20 is pressed against and arranged on the other end surface of the specimen holder 2 that is reverse to the end surface which is pressed on the ceramic member 13. The cathode 20 is an oscillator having a disk-like shape that is made of a conductive material. This cathode 20 is connected to the power source section 4 with a power line D.

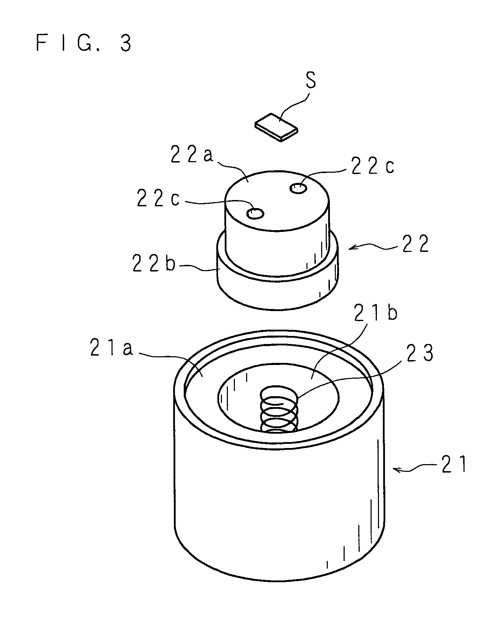

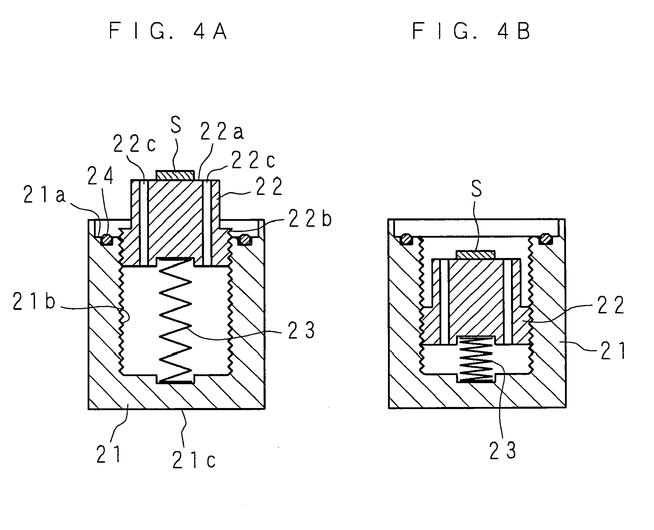

FIG. 3 is an exploded perspective view showing the specimen holder 2. FIGS. 4A and 4B are sectional views of the specimen holder 2. The specimen holder 2 is configured to comprise a hollow column casing part 21, a specimen support part 22, and a coil spring 23. The hollow column casing part 21, the specimen support part 22, and the coil spring 23 are all made of a conductive material. The hollow column casing part 21 is formed into a cylinder shape having one end that is open and the other end that is closed. A female screw 21b is formed from the opening to the bottom at the inner peripheral surface of the hollow column casing part 21. The hollow column casing part 21 has an opening end surface 21a, which is the end surface of the hollow column casing part 21 at the opening end side. This opening end surface 21a is formed to be flat and smooth, and pressed against the end surface 13a of the ceramic member 13. Although not shown in FIG. 3, the opening end surface 21a of the hollow column casing part 21 is formed with a channel into which an O-ring 24 is mounted. The hollow column casing part 21 further has a closed end surface 21c, which is the end surface of the hollow column casing part 21 at the closed end side. This closed end surface 21c is pressed on the cathode 20.

The specimen support part 22 is formed into a column shape that is coaxially combined a relatively large-diameter cylinder and a relatively small-diameter cylinder. One end of the specimen support part 22 is located at the small-diameter portion, and called a specimen support end 22a. This specimen support end 22a is flat and can adhere a tabular shaped specimen S with a double-faced tape. The relatively large-diameter cylinder portion of the specimen support part 22 is provided a male screw 22b at the interior side surface. A diameter of the relatively large-diameter portion and the pitch of the male screw 22b are determined to be able to screw the male screw 22b in the female screw 21b of the hollow column casing part 21. When the male screw 22b of the specimen support part 22 is screwed into the female screw 21b of the hollow column casing part 21 while arranging the specimen support end 22a with respect to the specimen support part 22 in accordance with the open end surface 21a with respect to the hollow column casing part 21, the specimen support part 22 can be screwed in the hollow column casing part 21. In addition, the specimen support part 22 comprises through-holes 22c and 22c that are passing from the specimen support end 22a to the opposite end.

FIG. 4A shows a state in which the specimen support part 22 is lightly screwed into the hollow column casing part 21, while FIG. 4B shows the state in which the specimen support part 22 is deeply screwed into the hollow column casing part 21. It is possible to adjust the position of the specimen support part 22 with respect to the hollow column casing part 21 by changing the screwing depth of the specimen support part 22 to the hollow column casing part 21. The specimen support end 22a of the specimen support part 22 adheres the specimen S. Therefore, it is possible to optionally adjust the position of the specimen S, within a range in which the male screw 22b can be screwed in the female screw 21b, by adjusting the position of the specimen support part 22. It means, the position of the specimen S is determined by the screwed engagement between the male screw 22b and the female screw 21b. The coil spring 23 has one end that contact one end of the specimen support part 22 which is opposite to the specimen support end 22a, and has the other end that contact a bottom of the hollow column casing part 21. As shown in FIGS. 4A and 4B, wherever the specimen support part 22 is positioned with respect to the hollow column casing part 21, the coil spring 23 is brought into contact with both of the hollow column casing part 21 and the specimen support part 22, because the coil spring 23 expands and contracts.

As shown in FIG. 2, the specimen holder 2 presses the open end surface 21a of the hollow column casing part 21 on the end surface 13a of the ceramic member 13, then the specimen support end 22a of the specimen support part 22 is arranged to be opposed to a leading end 12e of the cylindrical portion 12b of the anode 12. The O-ring 18 for sealing is attached between the open end surface 21a of the hollow column casing part 21 and the end surface 13a of the ceramic member 13. In this situation, the through-hole 12c of the anode 12 and the insertion hole 13c of the ceramic member 13 communicate with the inside of the specimen holder 2.

The vacuum holes 11e and 11f of the lamp body 11 are connected to the vacuuming unit 61 with a pipe, and the gas-feed hole 11g is connected to the gas-feed adjusting section 62 with a pipe. When the vacuuming unit 61 vacuums during a condition that the specimen holder 2 is pressed against the ceramic member 13, a vacuum pressure is formed inside of the vacuum holes 11e and 11f, the center hole 11c, the through-hole 12c of the anode 12, and the specimen holder 2. Particularly, it can be ensured to vacuum a portion at the far side from the specimen support part 22, via the through-holes 22c and 22c of the specimen support part 22. In this manner, the specimen holder 2 is mounted to the glow discharge tube 1. When the gas-feed adjusting section 62 starts to feed argon gas in this condition, the argon gas is filled within the gas-feed hole 11g, the center hole 11c, the through-hole 12c of the anode 12, and the specimen chamber 3.

When the cathode 20 is pressed against the specimen holder 2, the cathode 20 is brought into contact with the closed end surface 21c of the hollow column casing part 21 that is made of the conductive material. Accordingly, the hollow column casing part 21 has the potential same as that of the cathode 20. The male screw 22b of the specimen support part 22 is screwed in the female screw 21b of the hollow column casing part 21, and the coil spring 23 is brought into contact with both of the hollow column casing part 21 and the specimen support part 22. Therefore, the specimen support part 22 has the potential same as that of the cathode 20. Particularly, because the coil spring 23 is always brought into contact with both of the hollow column casing part 21 and the specimen support part 22, it can be surely secured to keep the conduction from the hollow column casing part 21 to the specimen support part 22. Accordingly, the specimen support end 22a that contacts the specimen S has the potential same as that of the cathode 20. As described later, the glow discharge is produced between the specimen S and the anode 12 when the voltage is applied with the anode 12 serving as an anode and with the cathode 20 serving as a cathode.

When the specimen support end 22a of the specimen support part 22 is opposed to the leading end 12e of the cylindrical portion 12b of the anode 12, the specimen S adhered onto the specimen support end 22a is arranged at the position opposite to the leading end 12e of the cylindrical portion 12b of the anode 12. Because the specimen S can be adhered onto the specimen support end 22a, it is possible to arrange any specimen, having size and shape within the adherent enable range, to be opposite to the leading end 12e of the anode 12. Furthermore, it is possible to optionally adjust the distance between the leading end 12e of the anode 12 and the specimen S by adjusting the position of the specimen support part 22 with respect to the hollow column casing part 21.

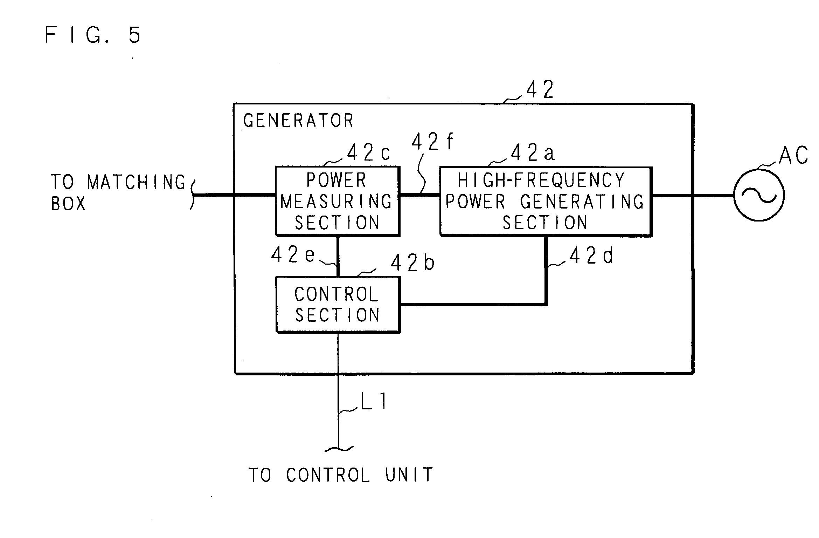

FIG. 5 is a block diagram showing the internal structure of the generator 42 constituting the power source section 4. The generator 42 comprises a high-frequency power generating section 42a, control section 42b, and power measuring section 42c. The high-frequency power generating section 42a is connected to an AC power source AC to generate high-frequency power for applying high-frequency AC voltage between the anode 12 and the cathode 20. In addition, the high-frequency power generating section 42a is connected to the control section 42b through a first internal connection line 42d to adjust an output mode, a power value or the like, through a control by the control section 42b. It is to be noted that the high-frequency power generating section 42a in the present embodiment generates a power which is a high-frequency voltage of 13.56 MHz. The control section 42b consists of an IC (integrated circuit), which is connected to the control unit 5 via the first connection cord L1. The control section 42b is configured to control the output from the high-frequency power generating section 42a in accordance with various signals outputted from the control unit 5.

The power measuring section 42c is connected to the control section 42b and the high-frequency power generating section 42a through second and third internal connection lines 42e and 42f. The power measuring section 42c is configured to detect an output value Pf, which is a power value of a traveling wave of the high-frequency power generated at the high-frequency power generating section 42a and supplied to the cathode 20. Furthermore, the power measuring section 42c is configured to detect a reflection value Pr, which is a power value of a reflection wave reflected by the cathode 20 and returned to the power measuring section 42c. Moreover, the power measuring section 42c is configured to transmit the detected values to the control section 42b.

The control section 42b can change two types of output modes, as a method to control the output of the high-frequency power. In one of the output modes, a predetermined high-frequency power is continuously outputted within a predetermined time so as to continuously apply the high-frequency power. This mode is referred to as a continuous mode, below. In the other of the output modes, the predetermined high-frequency power is outputted in a pulse form within a predetermined time so as to intermittently apply the high-frequency power. This mode is referred to as an intermittent mode, below.

The control section 42b executes a process to change the continuous mode and the intermittent mode in accordance with a signal outputted from the control unit 5. In the intermittent mode, the internal IC executes a process for the pulse form, and then alternate switching is occurred between performing a power supply and stopping the power supply. In addition, the control section 42b can adjust a feed-frequency corresponding to the number of feeding times per unit time, a duty ratio indicating a ratio of time when the power is fed during the intermittent mode, and a value of the fed power. The control section 42b can adjust the feed-frequency within the range from about 30 Hz to about 30000 Hz. A change of the feed-frequency brings a change of time interval for feeding the power in the pulse form.

During the course of the pre-treatment of the specimen S by the glow discharge, the distance between the specimen S and the leading end 12e of the anode 12 increases. Accordingly, an impedance value for the specimen S is occasionally changed. Therefore, the control section 42b executes an adjustment process for the change of the impedance value during the intermittent mode, as well. For example, the control section 42b receives the above-mentioned output value Pf and the reflection value Pr from the power measuring section 42c, calculates the difference between the output value Pf and the reflection value Pr, and controls to change the output value Pf based on the calculated difference. In addition, the control section 42b adjusts the output value Pf while keeping the difference (Pf-Pr) between the output value Pf and the reflection value Pr to be constant. In the present embodiment, the output value Pf that is generated at the high-frequency power generating section 42a is adjusted by a process executed by software of the IC incorporated in the control section 42b so that the calculated difference (Pf-Pr) becomes equal to the power value, which is used as a reference, transmitted from the control unit 5.

Because of the adjustment with software by the control section 42b, it is possible to provide a suitable power supply with respect to the change of the impedance value for the specimen S during the intermittent mode. It is noted that the control section 42b makes the adjustment corresponding to the change of the impedance value for the specimen S in the intermittent mode, although the matching box 41 makes the adjustment in the continuous mode, as described later.

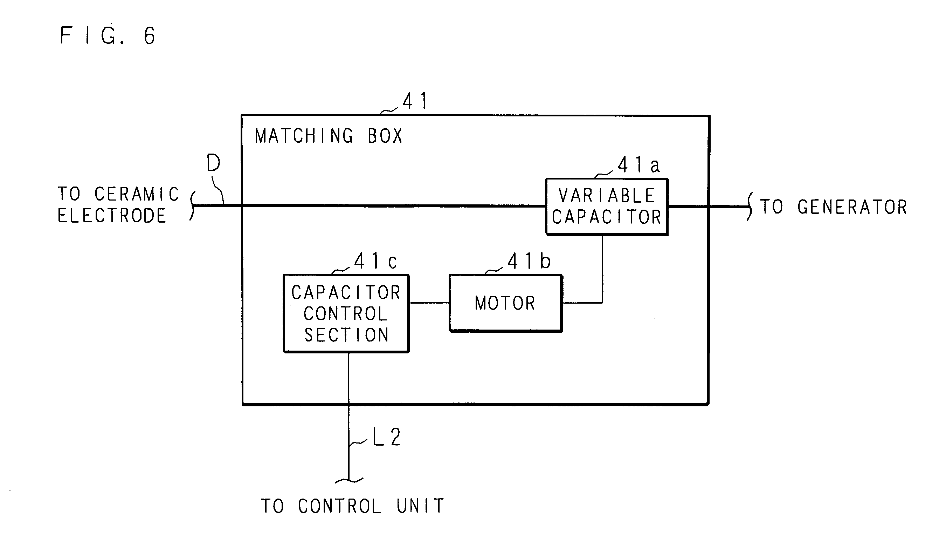

FIG. 6 is a block diagram showing the internal structure of the matching box 41 that is a component of the power source section 4. The matching box 41 comprises a variable capacitor 41a that adjusts the output manner of the high-frequency power which is generated in the generator 42 in the continuous mode, a motor 41b that adjusts the capacitance of the variable capacitor 41a, and a capacitor control section 41c that controls the drive of the motor 41b or the like. The variable capacitor 41a can change the capacitance of itself according to the drive of the motor 41b, and the change of the capacitance is utilized for adjustments of a module and a phase.

The capacitor control section 41c is connected to the control unit 5 with a second connection cord L2, and controls the drive of the motor 41b in accordance with an information signal that indicates the intermittent mode and is transmitted to the matching box 41 from the control unit 5. For example, when the matching box 41 receives the information signal indicating the intermittent mode, the capacitor control section 41c controls to keep the motor 41b at a constant state so that the capacitance of the variable capacitor 41a is fixed to a constant value. Accordingly, the matching box 41 does not adjust the module and the phase of the high-frequency power in the intermittent mode. When the matching box 41 does not receive the information signal indicating the intermittent mode, i.e., when the continuous mode is set, the capacitor control section 41c controls to change the capacitance of the variable capacitor 41a while controlling the drive of the motor 41b to minimize the reflection value Pr from the specimen S. If the reflection value Pr is minimized, the capacitor control section 41c does not control to change the capacitance of the variable capacitor 41a. The variable capacitor 41a is connected to the cathode 20 with a power line D, and the power source section 4 applies a high-frequency voltage to the cathode 20 through the power line D.

Next, it will describe a process performed by the specimen pre-treatment apparatus having the configuration explained above, focusing on the case of sputtering as one example of the pre-treatment The specimen pre-treatment apparatus can perform the pre-treatment with the glow discharge, such as etching, cleaning, sputtering, milling or the like, to the specimen S which is arranged to be opposite to the leading end 12e of the anode 12 Therefore, the specimen S can be sputtered in the depth direction from its surface and formed the observation surface that is observed with the SEM. The CPU 5a of the control unit 5 performs control processes to set a condition for the pre-treatment of the specimen S, in accordance with the control program 51. The control program 51 defines plural types of conditions for power supply, pressure in the anode 12, time taken for the pre-treatment, etc. For example, it is possible to adjust a pre-treatment speed of the specimen S, by controlling the power value of the high-frequency voltage that is applied from the power source section 4 to the cathode 20, the feed-frequency in the intermittent mode, or the duty ratio. A user can input to the control unit 5 the information, such as a material of the specimen S or the depth to be sputtered, that are required for the pre-treatment of the specimen S, by means of an input section (not shown) such as the keyboard or the mouse. The CPU 5a sets the condition such as the power value of the high-frequency voltage to be applied from the power source section 4 to the cathode 20, the feed frequency, or the duty ratio, in order to pre-treats the specimen S with a suitable speed.

After the vacuuming device 61 vacuums the glow discharge tube 1 and the specimen holder 2, the gas-feed source 63 feeds argon gas into the glow discharge tube 1, and the power source section 4 supplies the high-frequency voltage to the cathode 20 in accordance with the condition set by the CPU 5a. Because the high-frequency voltage is fed to the cathode 20, the high-frequency voltage is fed to the specimen holder 2 that has the same electrical potential the cathode 20. A sufficient argon gas is fed to the space, as needed, between the leading end 12e of the anode 12 and the surface of the specimen S, and then the high-frequency voltage is fed from the power source section 4 to the specimen support part 22 on which the specimen S is adhered. Therefore, the voltage is applied between the anode 12 and the specimen S, so that the glow discharge is produced between the anode 12 and the specimen S under the argon gas atmosphere. When the glow discharge is produced, argon ions are generated in the argon gas. The generated argon ions are accelerated in the through-hole 12c in accordance with the voltage, and collide with the surface of the specimen S opposite to the leading end 12e of the anode 12. As a result, an ionic shock is generated on the surface of the specimen S opposite to the leading end 12e of the anode 12.
This ionic shock of the argon ions causes to fly out particles, which are component materials of the specimen S, from the surface of the specimen S. Therefore, it is possible to sputter a predetermined area of the specimen S in accordance with the size of the leading end 12e of the anode 12. The channel 12f allows to pass out the argon ions collided with the specimen S and the argon gas containing the particles flied out from the surface of the specimen S.

The CPU 5a measures the time elapsed after the pre-treatment of the specimen S has started, during the course of the pre-treatment process for the specimen S. When it passes the time corresponding to the material of the specimen S and the depth to be sputtered, the CPU 5a stops the pre-treatment of the specimen S by stop feeding of the high-frequency voltage from the power source section 4. According to the processes described above, the specimen S is sputtered in the depth direction from the surface, so that the observation surface is formed for the observation with the SEM. The specimen pre-treatment apparatus may further comprise means for measuring the sputtering amount or the sputtering depth, to keep sputtering as far as obtaining a predetermined sputtering amount or sputtering depth.

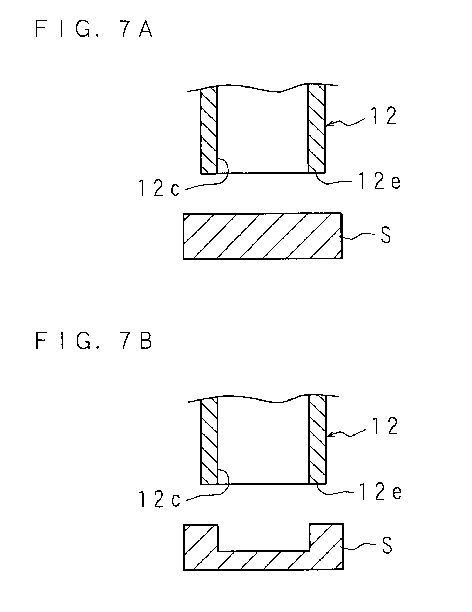

FIGS. 7A and 7B are sectional views showing the shape of the sputtered specimen S. FIG. 7A shows the specimen S before the start of the sputtering. The specimen S opposes to the leading end 12e of the anode 12, in FIG. 7A. The argon ions are released from the anode 12 due to the glow discharge and collide with the specimen S, so that the specimen S is sputtered. FIG. 7B shows the specimen S after the sputtering. The argon ions are accelerated in the through-hole 12c with the glow discharge and go almost straight to collide with the surface of the specimen S. Accordingly, it can almost restrict the collide portion with the argon ions of the surface of the specimen S to be a portion that is opposite to the through-hole 12c and corresponds the size of the through-hole. Thus, it is possible to restrict the sputtering portion of the surface of the specimen S within a range in accordance with the position and the size of the through-hole 12c.

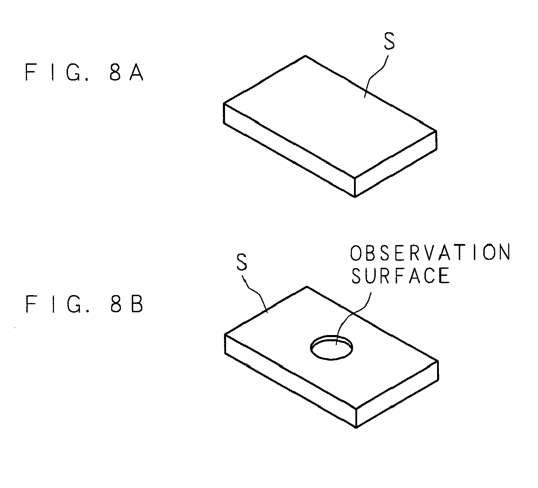

FIGS. 8A and 8B are perspective views schematically showing the specimen S to be sputtered. FIG. 8A shows the specimen S before the sputtering. The specimen S is formed into a flat plate shape, in FIG. 8A. FIG. 8B shows the specimen S that is formed the observation surface. The specimen S is sputtered in a circular shape corresponding to the shape of the leading end 12e of the anode 12. In other words, the sputtered area of the specimen S corresponds the size of the through-hole 12c of the anode 12. The sputtered area having the corresponding size of the through-hole 12c is simultaneously affected by the ionic shock, so that the sputtered area becomes almost smooth and clean. In other words, the observation surface becomes almost smooth and clean. Therefore, the specimen S with the observation surface can be a preferred subject for observation with the SEM. It is possible to observe the observation surface of the specimen S with the SEM, by removing and attaching the specimen S from the specimen holder 2 to the SEM.

As explained above in detail, in the present invention, the specimen holder 2 is mounted to the glow discharge tube 1 while the specimen support end 22a of the specimen support part 22 holding the specimen S is arranged to be opposite to the anode 12. Therefore, it is possible to arrange any specimen, having size and shape within the hold enable range of the specimen support end 22a, to be opposite to the leading end 12e of the anode 12. In other words, the present embodiment according to the present invention has advantages that relax the limitation to form an observation surface on the surface of a specimen which is observated with an SEM, regardless of the size and the shape of the specimen. Furthermore, it is possible to form an observation surface at an optional portion of the specimen S, within the hold enable range of the specimen support end 22a, in accordance with purposes of use. Thus, it is possible to form the observation surface at the optional portion of the specimen S in accordance with purposes of use, and to observe the optional portion of the specimen S with the SEM.

Moreover, it is possible to adjust optionally the position of the specimen support part 22 with respect to the hollow column casing part 21, in the present embodiment according to the present invention, by the adjustment of the distance between the leading end 12e of the anode 12 and the specimen S, followed by the change of the screwing depth of the specimen support part 22 to the hollow column casing part 21. Because the position of the specimen support part 22 is determined by the screwing engagement between the male screw 22b and the female screw 21b, the distance between the leading end 12e of the anode 12 and the specimen S can be adjusted correctly through the adjustment of the screwing depth. Therefore, it is possible to adjust the pre-treatment speed or the shape of the observation surface, by an appropriate adjustment of the distance between the leading end 12e of the anode 12 and the specimen S.

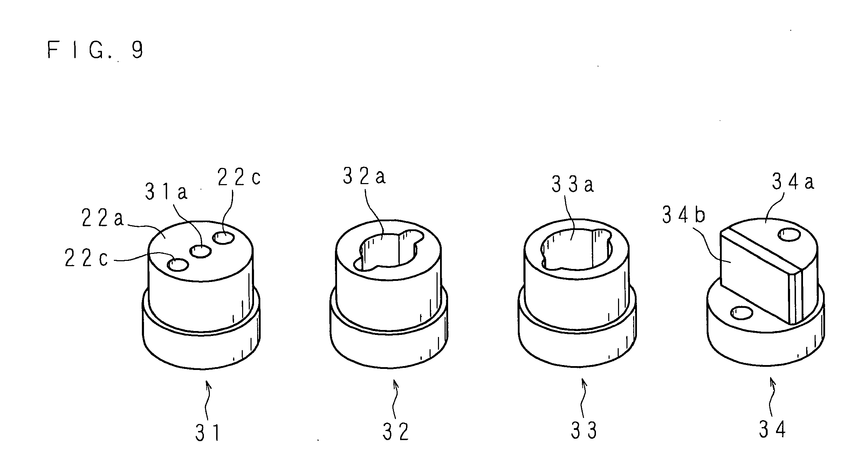

Next, it will describe the other embodiments of the specimen holder 2 that is changed the shape of the specimen support part 22. FIG. 9 shows schematic views showing the specimen support parts having several shapes. A specimen support part 31 is provided an insertion hole 31a at the center of the specimen support end 22a, in addition to the through-holes 22c and 22c. The insertion hole 31a is inserted and mounted a specimen support member for the exclusive use of the SEM. It is unnecessary that the insertion hole 31a penetrates the specimen support part 31. In a specimen support part 32, a diameter of the insertion hole 32a is increased and the insertion hole 32a contacts the through-holes 22c and 22c. In a specimen support part 33, the diameter of the insertion hole 32a is increased more than in the specimen support 32. A specimen support part 34 comprises a semi-circular column portion 34a obtained by cutting the relatively small-diameter cylinder in an axial direction, and a flat-plate pressing plate portion 34b mounted to the side plane of the semi-circular column portion 34a with a screw or the like not shown. The specimen support part 34 holds the specimen S between the side plane of the semi-circular column portion 34a and the pressing plate portion 34b.

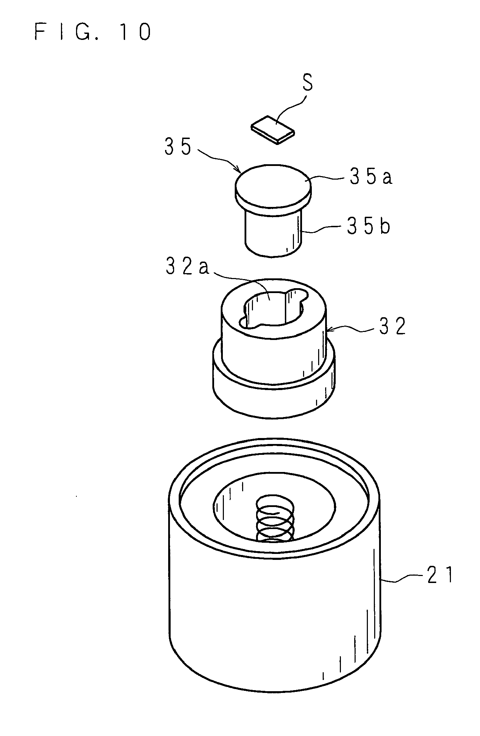

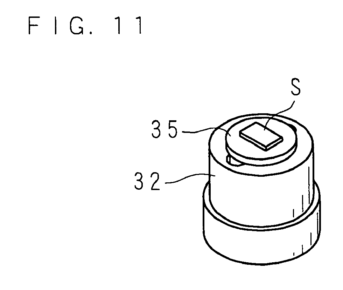

FIG. 10 is an exploded perspective view showing the specimen holder 2 using the specimen support part 31 that mounts the specimen support member for the exclusive use of the SEM. FIG. 11 is a perspective view showing the specimen support part 31 that mounts the specimen support member for the exclusive use of the SEM. As well as the specimen holder 2 shown in FIG. 3, the specimen support part 32 is screwed in the hollow column casing part 21. The specimen support member 35 for the exclusive use of the SEM is utilized to place the specimen S, and mounted to the SEM for observation. This specimen support member 35 for the exclusive use of the SEM is a table-like member that is configured with a placing surface 35a to place the specimen S and a cylindrical support section 35b to support the placing surface 35a. The placing surface 35a keeps the specimen S by adhesive. The insertion hole 32a of the specimen support part 32 has a size that can insert the support portion 35b of the specimen support member 35 for the SEM.

As shown in FIGS. 10 and 11, the specimen holder 2 can be formed with the specimen support member 35 for the exclusive use of the SEM that is mounted to the specimen support part 32, and with the specimen support part 32 that is mounted to the hollow column casing part 21. When mounting this specimen holder 2 to the glow discharge tube 1, the specimen pre-treatment apparatus can pre-treat the surface of the specimen S by the glow discharge and form the observation surface on the specimen S. After the observation surface is formed on the specimen S, it is possible to observe the specimen S with the SEM by detaching from the specimen support part 32 the specimen support member 35 for the exclusive use of the SEM that supports the specimen S, and by mounting to the SEM the detached specimen support member 35 for the exclusive use of the SEM. This configuration reduces the time and efforts that are required to observe the specimen having the observation surface with the SEM because the specimen support member 35 for the SEM is detachable from the specimen support part 32, as compared to the case that it is necessary to peel off the adhered specimen S from the specimen support end 22a for the remove of the specimen S from the specimen holder 2, and then to mount the peeled specimen S to the SEM. Accordingly, this configuration reduces the chance that the surface of the specimen is exposed to air and contaminated. Thus, the observation surface of the specimen can be kept under the satisfactory condition for observation.

In addition, the specimen pre-treatment apparatus may be configured such that the male screw is formed at the lateral surface of the support portion 35b, the female screw is formed at the insertion hole 32a, and the specimen support member 35 for the SEM can be tucked into the specimen support part 32. Furthermore, the specimen support part 32 may be configured to utilize a screw that fixes the support portion 35b inserted into the insertion hole 32a for fixing the specimen support member 35 for the exclusive use of the SEM. The specimen support parts 31 and 33 also may have a similar configuration to the specimen support part 32. A user may select one of the specimen support parts 31, 32 and 33 in accordance with the diameter of the support portion 35b of the specimen support member 35 for the exclusive use of the SEM that will be used.

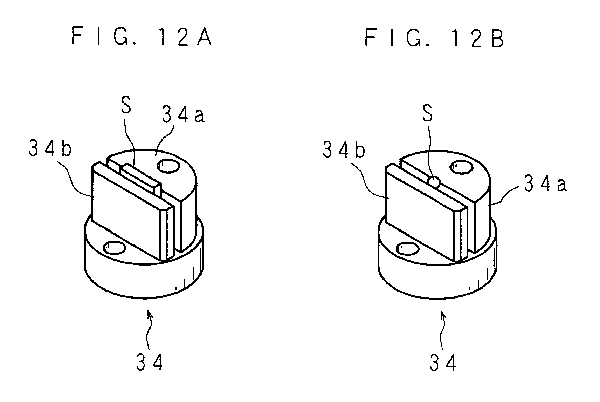

FIGS. 12A and 12B are perspective views showing the specimen support part 34 that supports the specimen S between the semi-circular column portion 34a and the pressing plate portion 34b. As shown in FIG. 12A, in the specimen support part 34, a plate-like specimen S is sandwiched between the side plane of the semi-circular column portion 34a and the pressing plate portion 34b, and the pressing plate portion 34b is fixed to the semi-circular column portion 34a with a screw or the like (not shown). Thus, the specimen support part 34 can vertically support the plate-like specimen S. Similarly, the specimen support part 34 can support a bar-like specimen S. As shown in FIG. 12B, the specimen support part 34 can further support a spherical specimen S by sandwiching the spherical specimen S between the side plane of the semi-circular column portion 34a and the pressing plate portion 34b.

When the hollow column casing part 21 mounts the specimen support part 34 that vertically supports the plate-like specimen S, the specimen pre-treatment apparatus can pre-treats the plate-like specimen S in the longitudinal direction of the specimen S. Thus, it is possible to observe the side face or the sectional face extending in parallel to minor axis of the plate-like specimen S with the SEM. Moreover, it is possible to pre-treat with the glow discharge a surface of the specimen S that is perpendicular to the end face of the specimen S opposing to the anode 12, by adjusting a size of the specimen S projecting from the specimen support part 34 when sandwiching the specimen S between the semi-circular column portion 34a and the pressing plate portion 34b, or by adjusting the screwing depth of the specimen support part 34 screwed to the hollow column casing part 21. As well as the plate-like specimen S, the specimen pre-treatment apparatus can pre-treat a bar-like specimen S and the spherical specimen S with the specimen support part 34, and then the pre-treated specimen S can be observed with the SEM. Thus, in the present embodiment, it is possible to observe the specimens S having various shapes with the SEM while applying the specimen support part 34.

In the present embodiments, the specimen holder 2 is arranged below the glow discharge tube 1. However, the present invention is not limited thereto. The specimen holder 2 may be arranged at the side of the glow discharge tube 1 or above the glow discharge tube 1.
In the present embodiments, voltage is applied to the cathode 20 that is pressed against the specimen holder 2, to generate the glow discharge between the specimen S and the anode 12. However, the present invention is not limited thereto. The specimen pre-treatment apparatus according to the present invention may be configured to directly apply the voltage to the specimen holder 2.
In the present embodiments, the hollow column casing part 21 and the specimen support part 22 have a circular column shape. However, a part or whole of the hollow column casing part 21 may be formed into rectangle shape in the present invention. Similarly, the specimen support part 22 may partly be formed to be rectangle within the range capable of being mounted to the hollow column casing part 21.
In the present embodiments, the female screw 21b is formed all over the inner surface of the hollow column casing part 21. However, the female screw 21b may be formed on a part of the inner surface of the hollow column casing part 21.
In the present embodiments, argon gas is fed in the glow discharge tube 1 upon the generation of the glow discharge. However, the other inactive gas may be fed in the present invention.
In the present embodiments, the SEM is used to observe the specimen S having the observation surface by the specimen pre-treatment apparatus according to the present invention. However, an optical microscope or transmission electron microscope may be used to observe the specimen S having the observation surface.
In the present embodiments, it is focused on the sputtering process as the pre-treatment. However, it is possible to perform the sputtering process, but also etching, cleaning, milling process or the like as the pre-treatment.
It should be understood that the embodiment described herein is only illustrative of the present invention and that various modifications may be made thereto without departing from the scope of the invention as defined in the appended claims.

## Claims

1. A specimen pre-treatment apparatus that comprises an electrode (12) having a cylindrical end portion (12b); and a specimen holder (2) that holds a specimen (S) at the position opposite to the end portion (12b) of the electrode (12), and that pre-treats the specimen (S) with a glow discharge generated between the electrode (12) and the specimen (S) which is held by the specimen holder (2), wherein
the specimen holder (2) comprises:
a hollow column casing part (21) that is formed into a hollow column shape having one end which is open and the other end which is closed, and that has a female screw (21b) formed on at least a part of the inner surface thereof, and
a specimen support part (22, 31, 32, 33, 34) that is formed into a column shape having a specimen support end (22a) which supports the specimen (S), and that has a male screw (22b) which is formed on at least a part of a lateral surface thereof and screwed in the female screw at the hollow column casing part;
the specimen support part (22, 31, 32, 33, 34) is screwed in the hollow column casing part (21) with the specimen support end (22a) facing in the same direction as the end which is open of the hollow column casing part (21); and
the specimen support end (22, 31, 32, 33, 34) is opposite to the cylindrical end portion (12b) of the electrode (12).

2. The specimen pre-treatment apparatus according to claim 1, wherein
the specimen support end (22a) is formed into a planar shape to adhere the specimen (S).

3. The specimen pre-treatment apparatus according to claim 1, wherein
the specimen support part (22, 31, 32, 33, 34) comprises a table-like member (35) that supports the specimen (S) and is detachably mounted at the specimen support end (22a).

4. The specimen pre-treatment apparatus according to claim 1, wherein
the specimen support part (22, 31, 32, 33, 34) has a table-like hole (31a, 32a, 33a) formed at the specimen support end (22a).

5. The specimen pre-treatment apparatus according to any one of claims 1 to 4, wherein
the hollow column casing part (21) and the specimen support part (22, 31, 32, 33, 34) are made of a conductive material;
the glow discharge is allowed to generate by applying a voltage between the electrode (12) and the specimen holder (2); and
the specimen holder (2) further comprises a conductive coil spring (23) that has one end portion being in contact with an end of the specimen support part (22, 31, 32, 33, 34) which is not the specimen support end (22a), and has the other end portion being in contact with the other end which is closed of the hollow column casing part (21).

6. The specimen pre-treatment apparatus according to any one of claims 1 to 5, further comprising:
an enclosure (13) that encloses the cylindrical end portion (12b) of the electrode (12); and
a vacuum unit (61) vacuums an inside of the electrode (12), wherein
the specimen holder (2) is arranged by pressing the end which is open of the hollow column casing part (21) against the enclosure (13); and
the specimen support part (22, 31, 32, 33, 34) has a through-hole (22c) that is hollowed out from the specimen support end (22a) to the opposite end of the specimen support part (22, 31, 32, 33, 34).

7. A specimen holder (2) that holds a specimen whose surface is pre-treated with a glow discharge, comprising:
a hollow column casing part (21) that is formed into a hollow column shape having one end which is open and the other end which is closed, and that has a female screw (21b) formed on at least a part of the inner surface thereof, and
a specimen support part (22, 31, 32, 33, 34) that is formed into a column shape having a specimen support end (22a) which supports the specimen (S), and that has a male screw (22b) which is formed on at least a part of a lateral surface thereof and screwed in the female screw (21b) at the hollow column casing part, wherein
the specimen support part (22, 31, 32, 33, 34) is screwed in the hollow column casing part (21) with the specimen support end (22a) facing in the same direction as the end which is open of the hollow column casing part (21).

8. The specimen holder according to claim 7, wherein
the specimen support end (22a) is formed into a planar shape to adhere the specimen (S).

9. The specimen holder according to claim 7, wherein
the specimen support part (22, 31, 32, 33, 34) comprises a table-like member (35) that supports the specimen (S) and is detachably mounted at the specimen support end (22a).

10. The specimen holder according to claim 7, wherein
the specimen support part (22, 31, 32, 33, 34) has a table-like hole (31a, 32a, 33a) formed at the specimen support end (22a).

11. The specimen holder according to any one of claims 7 to 10, further comprising:
a conductive coil spring (23) that has one end being in contact with an end of the specimen support part (22, 31, 32, 33, 34) which is not the specimen support end (22a), and has the other end being in contact with an inner bottom portion of the hollow column casing part (21), wherein
the hollow column casing part (21) and the specimen support part (22, 31, 32, 33, 34) are made of a conductive material.

12. The specimen holder according to any one of claims 7 to 11, wherein
the specimen support part (22, 31, 32, 33, 34) has a through-hole (22c) that is hollowed out from the specimen support end (22a) to the opposite end of the specimen support part (22, 31, 32, 33, 34).
